# EUROPEAN PATENT APPLICATION

(11) **EP 4 737 037 A1**
(43) Date of publication of application: **06.05.2026**
(21) Application number: 24831607.7
(22) Date of filing: 06.06.2024
(51) Int. Cl.: B23B 29/24, B23Q 3/155, B23Q 15/00

(54) **TURRET CONTROL DEVICE AND TURRET LATHE**

(30) Priority: 30.06.2023 JP 2023107638
(71) Applicant: Citizen Machinery Co., Ltd., Nagano 389-0206 (JP)
(72) Inventor: TAGUCHI Noriyoshi, Kitasaku-gun, Nagano 389-0206 (JP)
(74) Representative: Louis Pöhlau Lohrentz
(86) International application number: PCT/JP2024/020656
(87) International publication number: WO 2025/004737

(57) **Abstract**

To improve the accuracy of a stopping position after rotation of a turret, a turret lathe (100) includes a drive portion (25) configured to rotate, about an axis (C2), a turret (22) that includes twelve turret surfaces (23) to which tool holders (T) including tools (t) are attached; a control portion (34) configured to control an operation of the drive portion (25); a receiving portion (31) configured to receive input of information regarding a tool layout identifying an arrangement in which the tool holders (T) are attached to the turret surfaces (23); a center-of-gravity calculation portion (32) configured to calculate a center of gravity (M') of the turret (22) in the tool layout based on the inputted information regarding the tool layout, information regarding a weight and a center of gravity of the attached tool holders (T), and information regarding a weight and a center of gravity of the turret (22) alone; and an eccentricity calculation portion (33) configured to calculate an eccentricity (δ) of the center of gravity (M') with respect to the axis (C2). The control portion (34) controls a rotation speed of the turret (22) based on the eccentricity (δ).

## Description

### [Technical Field]

The present invention relates to a turret control device and a turret lathe.

### [Background Art]

Machine tools such as automatic lathes that include a turret tool post are known in the art. The turret of the turret tool post is formed in a shape of a prism. The turret includes turret surfaces that form peripheral surfaces of the prism, on which tool holders are respectively attached. Tools such as drills and reamers are mounted on the tool holders.

The tool holder is selected according to the type of machining to be performed on the workpiece and is attached to each turret surface. The workpiece undergoes machining steps in sequence by the tool holders respectively attached to different turret surfaces. Thus, as the machining process proceeds, it is necessary to perform an indexing operation by rotating the turret to switch the tool holder.

Here, in order to shorten the switching time of the tool holder, a layout is sometimes adopted in which the tool holders used in machining are disposed on turret surfaces adjacent in the rotation direction.

Then, in particular, when a small number of tool holders are attached to the turret, the tool holders are disposed to concentrate in a specific angular range of the turret. This may lose a weight balance around the rotation center. Thus, an overshoot may occur in which the turret passes over its intended stopping position during an indexing operation of a particular tool holder. This makes it impossible to accurately control the stopping position. After this overshoot, another overshoot may occur in an operation to return to the correct stopping position, thereby causing a hunting operation.

A slight deviation in the stopping position causes a phase shift in the engagement of a curvic coupling during rotation of the turret, causing the stopping position to deviate.

A turret rotation speed determination device has been proposed that increases the rotation speed of the turret while ensuring the accuracy of the stopping position (see, for example, Patent Literature 1).

### [Prior Art Documents]

### [Patent Literature]

[Patent Literature 1] Japanese Patent Application Publication No. 2000-218470

### [Summary of Invention]

### [Problem to be solved]

The above-mentioned turret rotation speed determination device described in Patent Literature 1 determines the rotation speed of the turret based on the tool layout, or based on the tool layout together with the weight of the tools. However, it does not disclose the tool layout, and the process for determining the rotation speed of the turret is unclear.

The present invention has been made in view of the above-described circumstances. An object of the present invention is to provide a turret control device and a turret lathe that are able to improve accuracy of the stopping position after rotation of the turret.

### [Solution to Problem]

According to a first aspect of the present invention, a turret control device includes a drive portion that is configured to rotate a turret about a predetermined rotation center, the turret including a plurality of turret surfaces to which a tool holder including a tool is attached; a control portion that is configured to control an operation of the drive portion; a receiving portion that is configured to receive input of information regarding a tool layout identifying an arrangement in which the tool holder is attached to the turret surface; a center-of-gravity calculation portion that is configured to calculate a center of gravity of the turret in the tool layout, based on the information regarding the tool layout inputted to the receiving portion, information regarding a weight and a center of gravity of the tool holder attached to the turret surface, and information regarding a weight and a center of gravity of the turret alone; and an eccentricity calculation portion that is configured to calculate an eccentricity of the center of gravity of the turret calculated by the center-of-gravity calculation portion with respect to a position of the rotation center. The control portion is configured to control a rotation speed of the turret by the drive portion based on the eccentricity.

According to a second aspect of the present invention, a turret lathe includes a turret device that includes a turret, wherein the turret rotates about a predetermined rotation center and includes a plurality of turret surfaces to which a tool holder including a tool is attached; a main spindle that is configured to hold a workpiece machined by the tool attached to the turret; and a control device that is configured to control the main spindle and the turret. The control device includes the turret control device according to the present invention.

### [Effects of Invention]

The turret control device and the turret lathe according to the present invention can improve the accuracy of the stopping position after the rotation of the turret.

### [Brief Description of Drawings]

[FIG. 1] FIG. 1 is a perspective view schematically showing a major external appearance of a turret lathe.
[FIG. 2] FIG. 2 is a front view schematically showing a condition of a turret when viewed in the direction of an axis C2 of the turret.
[FIG. 3] FIG. 3 is a block diagram showing a configuration of a control device 30 that controls operation of the turret lathe.
[FIG. 4] FIG. 4 is a view showing a center of gravity m1 in a local coordinate system of a tool holder T1 alone.
[FIG. 5] FIG. 5 is a view showing a center of gravity m4 in a local coordinate system of a tool holder T4 alone.
[FIG. 6] FIG. 6 is a schematic view showing a center of gravity M' (X', Y') and an eccentricity δ from a rotation center (axis C2) of the turret in a global coordinate system according to an exemplary layout of respective tool holders, showing the layout in which the tool holders are disposed to concentrate in an angular range θ1.
[FIG. 7] FIG. 7 is a schematic view showing a center of gravity M' (X', Y') and an eccentricity δ from the rotation center (axis C2) of the turret in a global coordinate system according to an exemplary layout of respective tool holders, showing the layout in which the tool holders are disposed to disperse in an angular range θ2 (> θ1).
[FIG. 8] FIG. 8 is a flowchart showing a detailed operation of the control device.

### [Detailed Description of Embodiments]

An embodiment of a turret control device and a turret lathe according to the present invention will be described with reference to the drawings.

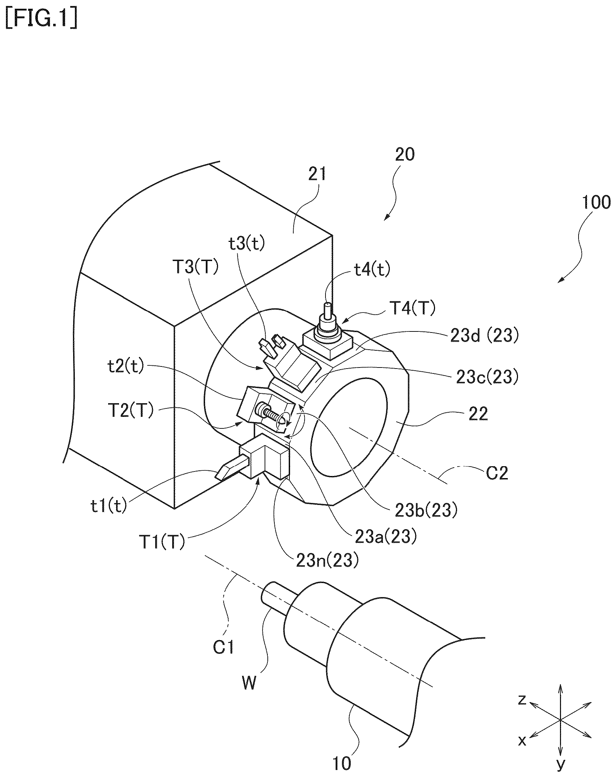

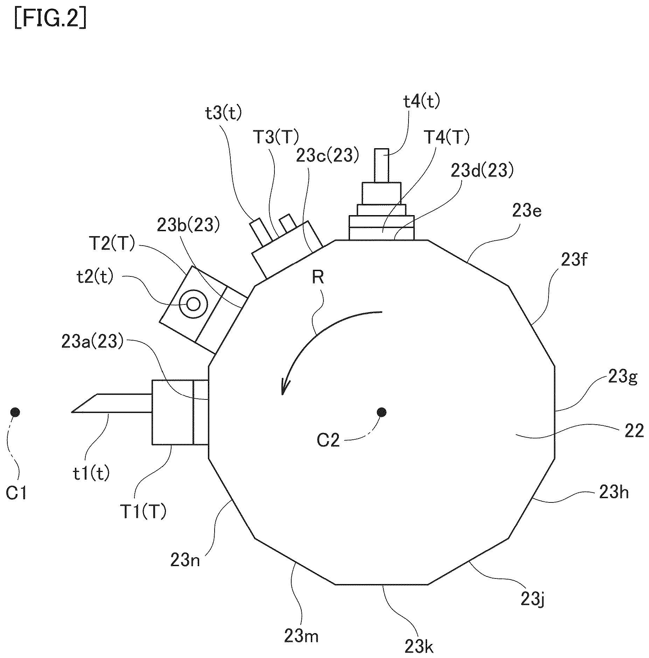

FIG. 1 is a perspective view schematically showing a turret lathe 100. FIG. 2 is a front view schematically showing the turret 22 when viewed in the direction of its axis C2.

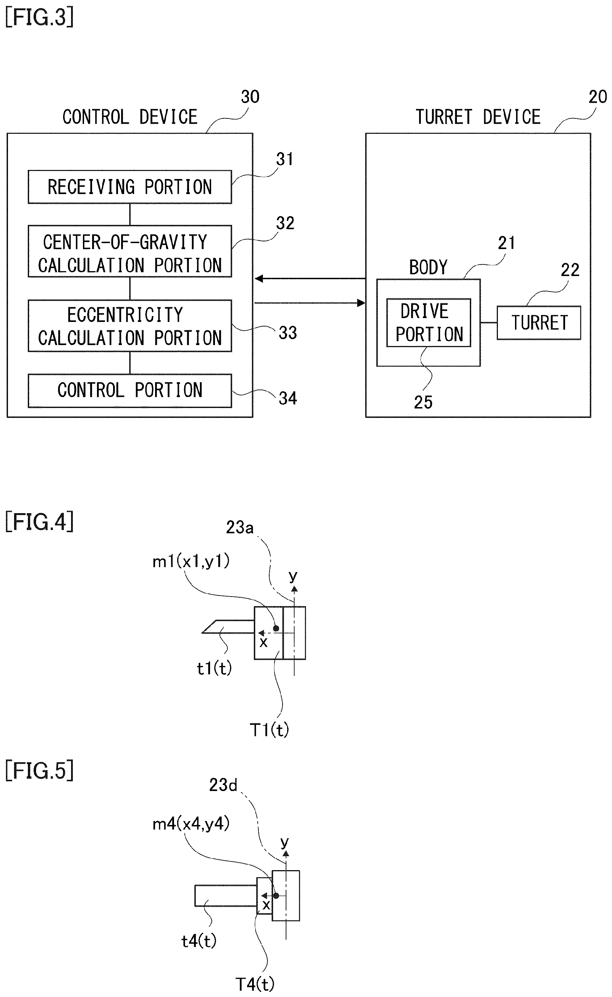

FIG. 3 is a block diagram showing a configuration of the control device 30 that controls the operation of the turret lathe 100. The turret lathe 100 corresponds to one embodiment of the turret lathe according to the present invention.

The turret lathe 100 includes a main spindle 10 and a turret device 20 shown in FIG. 1, and a control device 30 shown in FIG. 3. Besides the main spindle 10, the turret device 20, and the control device 30, the turret lathe 100 includes a cutting fluid device that is configured to spray a cutting fluid onto a workpiece W as the machining object when cutting the workpiece, and other components. However, the description of these components is omitted. The turret lathe 100 may further include a second main spindle (backward main spindle), a second turret device, and the like.

The main spindle 10 includes, at its distal end, a holding mechanism of, for example, a collet chuck. This holding mechanism holds the workpiece W, which may be mainly a bar material. The main spindle 10 is rotatable around an axis C1 by the control of the control device 30. The axis C1 is parallel to the z-axis in a longitudinal direction of the main spindle 10. The main spindle 10 advances and retracts in parallel to the z-axis by the control of the control device 30.

The turret device 20 includes a body 21 and the turret 22. The turret 22 may have a regular dodecagonal prism shape as an example. The shape of turret 22 is not limited to a regular dodecagonal prism. The turret 22 may have a regular decagonal prism shape. The turret 22 may also have another regular polygonal prism shape such as a regular octagonal prism shape. The shape of turret 22 is not limited to a regular polygonal prism with a regular polygonal cross section, but may also be a polygonal prism with a nonregular polygonal cross section. In other words, a plurality of turret surfaces 23 of the turret 22, which are peripheral surfaces around the axis C2 as the central axis of a polygonal prism, only need to be planes parallel to the axis C2.

The turret 22 of the present embodiment is configured to rotate about the axis C2, which is the central axis of a regular dodecagonal prism. The turret 22 includes the peripheral surfaces around the axis C2, each surface being a plane parallel to the axis C2. These planes are the turret surfaces 23 to which the tool holders T described later are attached. The turret 22 of this embodiment includes twelve turret surfaces 23. When the turret surfaces 23 are individually described as shown in FIG. 2, they are denoted by turret surfaces 23a, 23b, 23c, 23d, 23e, 23f, 23g, 23h, 23j, 23k, 23m, and 23n (symbol 23i (lowercase "i") and symbol 23l (lowercase "l") are excluded to prevent misidentification with other letters).

As shown in FIGS. 1 and 2, the tool holder T is attached to each of the turret surfaces 23. As the turret 22 rotates about the axis C2, the tool holder T attached to each of the turret surfaces 23 rotates about the axis C2.

The tool holder T holds a tool t that is configured to machine the workpiece W held by the main spindle 10 and fixes the tool t to the turret surface 23. Depending on the type of the tool t, the tool holder T can rotate the tool t by transmitting to the tool t the drive force supplied from the body 21 through the turret 22.

The body 21 supports the turret 22 so that it is rotatable about the axis C2. Furthermore, the body 21 includes a drive portion 25. The drive portion 25 is configured to rotate the turret 22 about the axis C2, rotate the tool t of the tool holder T fixed to the turret surface 23 about the axis of the tool holder T, and rotate the tool holder T itself.

The control device 30 controls the overall operation of the turret lathe 100. Specifically, the control device 30 controls the movements of the main spindle 10, including the opening and closing of the holding mechanism of the main spindle 10, the rotation about the axis C1 of the workpiece held by the main spindle 10, and the movement of the main spindle 10 itself in the z-axis direction, and controls the movement of the turret device 20. In addition to the movements of the main spindle 10 and the turret device 20, the control device 30 also controls the movements of the cutting fluid device and other components of the turret lathe 100.

The control device 30 in FIG. 3 is illustrated as a block diagram showing only the components related to the control of the movement of the turret device 20, as one embodiment of the turret control device according to the present invention, among the controls of the components of the turret lathe 100.

In addition to the components related to the control of the movement of the turret device 20 shown in FIG. 3, the control device 30 includes a memory that stores a program defining the operations of the entire turret lathe 100 including the main spindle 10, an operation panel that inputs instructions including ones related to the operations of the entire turret lathe 100, a display (monitor), and the like. However, the descriptions of these components other than those related to the control of the movement of the turret device 20 are omitted.

As shown in FIG. 3, the control device 30 includes a receiving portion 31, a center-of-gravity calculation portion 32, an eccentricity calculation portion 33, and a control portion 34 as components related to the control of the movement of the turret device 20. As far as the control of the movement of the turret device 20 is concerned, the control device 30 is one embodiment of the turret control device according to the present invention.

The receiving portion 31 receives information regarding the tool layout (tool layout information) that specifies the arrangement state in which the tool holder(s) T are attached to the turret surfaces 23, that is, which tool holder(s) T is attached to which turret surface 23 among the twelve turret surfaces 23 of the turret 22.

In other words, in the turret lathe 100, the tool holders T are not always attached to all of the twelve turret surfaces 23 (23a, ..., 23n), irrespective of the type of machining on the workpiece W. Depending on the type of machining on the workpiece W, the tool holder(s) T including the tool(s) t selected according to the type of machining is attached only to the turret surface(s) 23 at one position or at least two positions selected from the twelve turret surfaces 23.

The receiving portion 31 receives the tool layout information input by the user. The tool layout information input to the receiving portion 31 by the user is information that associates the information identifying the turret surfaces 23 (turret surfaces 23a, ..., 23n) to which the tool holders T are attached, selected from the twelve turret surfaces 23a, ..., 23n, with the information identifying the tool holders T (T1, T2, T3, T4, ...) attached to the identified turret surfaces 23a, ..., 23n. The tool layout information may include information identifying the tools t (t1, t2, t3, t4, ...).

For example, in the state shown in FIG. 2, the tool holder T1 is attached to the turret surface 23a, the tool holder T2 is attached to the turret surface 23b, the tool holder T3 is attached to the turret surface 23c, and the tool holder T4 is attached to the turret surface 23d, and no tool holder T is attached to the other turret surfaces 23e, ..., 23n.

In this case, the user inputs, into the receiving portion 31, a combination of the turret surface 23a (information identifying the turret surface 23, hereinafter the same) and the tool holder T1 (information identifying the tool holder T, hereinafter the same), a combination of the turret surface 23b and the tool holder T2, a combination of the turret surface 23c and the tool holder T3, and a combination of the turret surface 23d and the tool holder T4.

The information obtained by identifying, for all of the turret surfaces 23 to which the tool holder(s) T are attached, the combinations of the information identifying the turret surfaces 23 and the information identifying the tool holders T is the tool layout information that specifies the arrangement state (tool layout) of the turret surfaces 23 to which the tool holders T are attached in the turret 22. Thus, the receiving portion 31 receives the tool layout information.

The center-of-gravity calculation portion 32 calculates the center of gravity of the turret 22 in a plane perpendicular to the axis C2 in a state in which the tool holder(s) T are attached to the turret surface(s) 23. Specifically, the center-of-gravity calculation portion 32 stores, for each tool holder T prepared to be attached to the turret surface 23, the weight of the tool holder alone and its center of gravity m in the local coordinate system (xy coordinate system), and also stores the weight of the turret 22 alone and its center of gravity M0 in the global coordinate system (XY coordinate system) in a state in which none of the tool holders T are attached to the turret surfaces 23.

FIG. 4 is a view showing the center of gravity m1 in the local coordinate system of the tool holder T1 alone. FIG. 5 is a view showing the center of gravity m4 in the local coordinate system of the tool holder T4 alone. For example, the tool holder T1 including the tool t1 has a predetermined weight by itself. As shown in FIG. 4, center of gravity of the tool holder T1 alone is identified as m1 (x1, y1) in the local coordinate system (xy coordinate system) in which the y-axis is defined on the turret surface 23 and the x-axis is defined on the center line of the tool holder T1, on the assumption that the tool holder T1 has been attached to the turret surface 23. Thus, the center-of-gravity calculation portion 32 stores the weight of the tool holder T1 alone and its center of gravity m1, which have been determined in advance.

Similarly, the tool holder T4 including the tool t4 has a predetermined weight by itself. As shown in FIG. 5, the center of gravity of the tool holder T4 alone is identified as m4 (x4, y4) in the local coordinate system (xy coordinate system), in which the y-axis is defined on the turret surface 23 and the x-axis is defined on the center line of the tool holder T4, on the assumption that the tool holder T4 has been attached to the turret surface 23. Thus, the center-of-gravity calculation portion 32 stores the weight of the tool holder T4 alone and its center of gravity m4, which have been determined in advance.

The center-of-gravity calculation portion 32 also stores the previously determined weight of the turret 22 alone and the previously determined center of gravity M0 of the turret 22 alone in the plane perpendicular to the axis C2, on the assumption that the axis C2 as the rotation center is defined as the origin (0, 0) of the global coordinate system (XY coordinate system).

The center-of-gravity calculation portion 32 calculates the center of gravity M' in the global coordinate system of the turret 22, to which the tool holder(s) T are attached in the arrangement of the tool layout information, based on the tool layout information input to the receiving portion 31, the information on the weight of the tool holder T alone and its center of gravity in the local coordinate system, and the information on the weight of the turret 22 alone and its center of gravity in the global coordinate system.

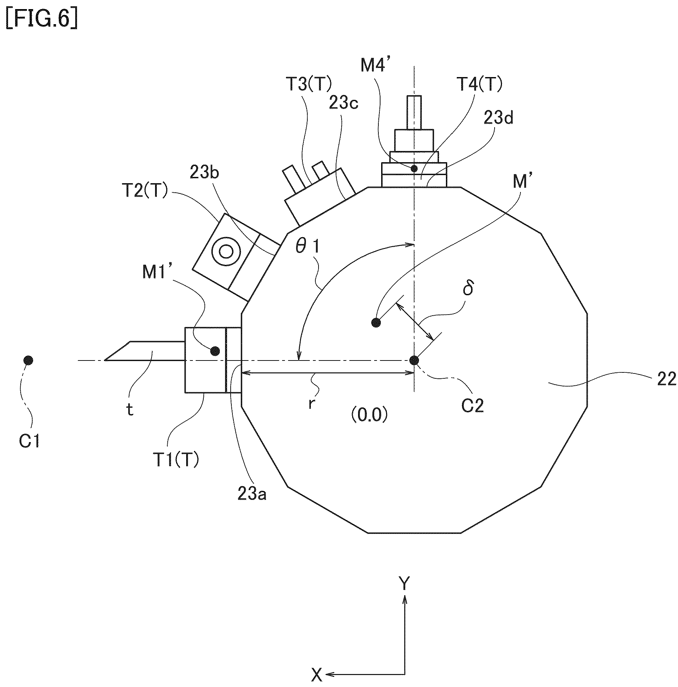

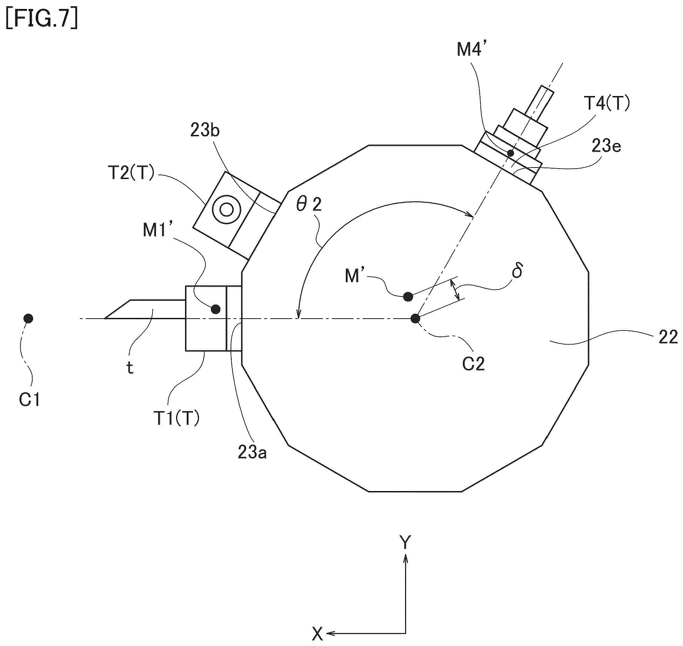

Each of FIGS. 6 and 7 is a schematic view showing the center of gravity M' (X', Y') and the eccentricity δ from the rotation center (axis C2) of the turret 22 in the global coordinate system according to an exemplary tool layout of respective tool holders T. FIG. 6 shows a tool layout in which the tool holders T are disposed to concentrate in an angular range θ1. FIG. 7 shows a tool layout in which the tool holders T are disposed to disperse in an angular range θ2 (> θ1).

As shown in FIG. 6, in a condition in which the tool holder T1 having the center of gravity m1 (x1, y1) in the local coordinate system is attached to the turret surface 23a that is parallel to the Y-axis in the global coordinate system, when the origin of the local coordinate system is placed on the center position of the turret surface 23a in the global coordinate system, the center of gravity M1' (X1', Y1') of the tool holder T1 alone in the global coordinate system can be calculated by adding the distance r between the axis C2 and the turret surface 23a to the x-coordinate value of the center of gravity m1 (x1, y1) in the local coordinate system (see FIG. 4). In other words, the center of gravity M1' (X1', Y1') corresponds to the center of gravity M1' at (x1 + r, y1).

Furthermore, as shown in FIG. 6, in a state in which the tool holder T4 having the center of gravity m4 (x4, y4) in the local coordinate system is attached to the turret surface 23d that is parallel to the X-axis in the global coordinate system, when the origin of the local coordinate system is placed at the center position of the turret surface 23d in the global coordinate system, the center of gravity M4' (X4', Y4') of the tool holder T4 alone in the global coordinate system can be calculated by adding the distance r between the axis C2 and the turret surface 23d to the y-coordinate value of the center of gravity m4 (x4, y4) in the local coordinate system (see FIG. 5). In other words, the center of gravity M4' (X4', Y4') corresponds to the center of gravity M4' at (x4, y4 + r).

For the tool holders T2 and T3 as well, which are respectively attached to the other turret surfaces 23b and 23c that are not parallel to the X-axis and the Y-axis, when the origin of the local coordinate system is placed at each center position of the turret surfaces 23b and 23c in the global coordinate system, the centers of gravity M2' (X2', Y2') and M3' (X3', Y3') of the tool holders T2 and T3 alone in the global coordinate system can be calculated according to the inclination of the respective turret surfaces 23b and 23c.

Then, the center of gravity M' of the turret 22 in the global coordinate system, in a state in which one or at least two tool holders T are attached thereto, can be calculated by applying a general method in physics for calculating the center of gravity of a combination of a plurality of members, based on the centers of gravity and weights in the global coordinate system of the respective tool holders alone and the center of gravity and weight in the global coordinate system of the turret 22 alone.

The eccentricity calculation portion 33 calculates an eccentricity δ, which is the distance between the center of gravity M' of the turret 22 in the global coordinate system, the center of gravity M' having been calculated by the center-of-gravity calculation portion 32 for the turret 22 with the tool layout according to the tool layout information, and the axis C2 as the rotation center of the turret 22. The position of the axis C2 in the global coordinate system is the origin (0, 0) and is stored in advance in the eccentricity calculation portion 33.

When the layouts shown in FIGS. 6 and 7 are compared, the angular range θ around the axis C2 of the turret 22 in which the tool holders T attached to the turret 22 are disposed is such that, in the layout of FIG. 6, the tool holders T are concentrated in the angular range θ1, whereas, in the layout of FIG. 7, the tool holders T are dispersed in a wider angular range θ2 (> θ1). Furthermore, the number of tool holders T attached in the layout of FIG. 7 is smaller than that in the layout of FIG. 6.

Accordingly, in the layout of FIG. 6, the eccentricity δ of the center of gravity M' with respect to the position of the axis C2 as the rotation center is greater than that in the layout of FIG. 7. When the eccentricity δ is large in the layout, the turret 22 becomes unbalanced in weight when rotating about the axis C2, resulting in a large moment of inertia. The drive portion 25 rotates the turret 22 at its rated maximum speed and performs an indexing operation to stop the tool t on the tool holder T at the position for machining the workpiece W (for example, the position facing the axis C1 of the main spindle in FIG. 2). However, in a layout having a large moment of inertia, overshooting may occur in which the tool holder T fails to stop at the intended stopping position and instead passes the intended stopping position and stops thereafter.

The control portion 34 controls the operation of the drive portion 25 provided in the body 21 of the turret device 20 based on the eccentricity δ calculated by the eccentricity calculation portion 33. Specifically, when the eccentricity δ is greater than a predetermined threshold δ0, the control portion 34 controls the drive portion 25 to reduce the rotation speed of the turret 22 from a preset rated maximum speed. The threshold δ0 to be compared with the eccentricity δ is stored in the control portion 34.

The threshold δ0 to be compared with the eccentricity δ is a value corresponding to an eccentricity at which overshooting occurs. The overshooting is such that, for each of numerous various tool layouts of one or at least two tool holders T, such as those exemplified in FIGS. 6 and 7, the eccentricity δ is calculated in advance, the turret 22 is rotated at its rated maximum speed, and an indexing operation is performed to stop the tool t on the tool holder T at the position for machining the workpiece W (for example, the position facing the axis C1 of the main spindle in FIG. 2), and the tool holder T fails to stop at the intended stopping position and instead passes the intended stopping position and stops thereafter.

In other words, for each of numerous various tool layouts of the tool holder(s) T, an experiment is performed in which the turret 22 is rotated at its rated maximum speed and then stopped by the indexing operation. Based on the result of this experiment, the threshold δ0 is set as a boundary value between an eccentricity at which overshooting occurs and an eccentricity at which overshooting does not occur.

In other words, when the eccentricity δ is greater than the threshold δ0, the control portion 34 controls the drive portion 25 so that the rotation speed of the turret 22 in the indexing operation becomes lower than the preset rated maximum speed and becomes a speed at which overshooting does not occur.

On the other hand, when the eccentricity δ is not greater than the threshold δ0, the control portion 34 controls the drive portion 25 so that the rotation speed of the turret 22 in the indexing operation becomes the preset rated maximum speed.

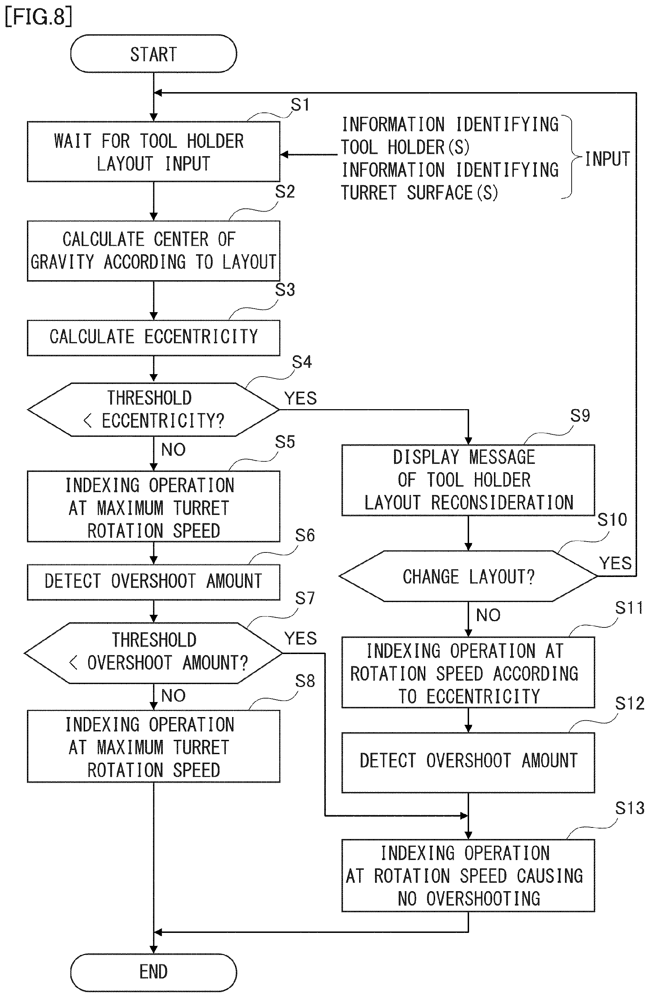

FIG. 8 is a flowchart showing a detailed operation of the control device 30. A more detailed operation of the control device 30 will be described with reference to FIG. 8.

When the processing of the indexing operation of the turret device 20 starts, the receiving portion 31 first waits for the user to input information identifying the tool holder(s) T (such as tool holder numbers T1, T2, ... and the like) and information identifying the turret surface(s) 23 (such as turret surface numbers 23a, 23b, ... and the like) to which the tool holder(s) T are attached (S1). After these inputs are received, the arrangement of the tool holder(s) T in the turret 22 (tool layout information) is identified, and the identified tool layout information is inputted to the center-of-gravity calculation portion 32.

The center-of-gravity calculation portion 32 calculates the center of gravity M' in the global coordinate system of the turret 22, in a condition that the tool holder(s) T are attached in the arrangement of the tool layout information, based on the inputted tool layout information; the information stored in the center-of-gravity calculation portion 32 about the weight of each tool holder T alone and its center of gravity in the local coordinate system, the tool holder(s) T being those attached to the turret surface(s) 23 in the tool layout information; and the information regarding the weight of the turret 22 alone and its center of gravity in the global coordinate system (S2). The calculated center of gravity M' is inputted to the eccentricity calculation portion 33.

The eccentricity calculation portion 33 calculates the eccentricity δ of the center of gravity M' with respect to the axis C2, based on the inputted center of gravity M' in the global coordinate system and the position of the axis C2 in the global coordinate system, which is previously stored in the eccentricity calculation portion 33 (S3). The eccentricity δ is inputted to the control portion 34.

The control portion 34 compares the inputted eccentricity δ with the threshold δ0 previously stored in the control portion 34 (S4). When the control portion 34 determines that the eccentricity δ is not greater than the threshold δ0 (NO in S4), the control portion 34 controls the drive portion 25 to perform a trial run of the indexing operation in which the turret 22 rotates at the rated maximum speed (S5). In this trial run of the indexing operation, the tool holder T disposed at a position where the rotation angle around the axis C2 becomes the greatest from the position of the workpiece W (the position of the axis C1 in FIGS. 2, 6 and 7) is rotated and stopped so as to be indexed to the workpiece W disposed at the axis C1.

In this trial run of the indexing operation, the control portion 34 or the drive portion 25 detects an overshoot amount of the tool holder T disposed at a position where the rotation angle around the axis C2 becomes the greatest, from the position indexed to the workpiece W disposed at the axis C1 (S6). The overshoot amount is defined as zero when the stopping occurs without overshooting. The overshoot amount is defined as the rotation angle from the intended stopping position when the stopping occurs with overshooting.

When the drive portion 25 rotates the turret under the control of a servo motor, an encoder used for feedback control of the rotation angle by the servo motor may be used to detect an overshoot amount. The encoder may serve as an overshoot amount detection portion configured to detect an overshoot amount.

When the drive portion 25 is a drive member other than a servo motor, for example, a stepping motor, the turret device 20 may be provided with an overshoot amount detection portion configured to detect the rotation angle of the turret 22, thereby detecting an overshoot amount.

The control portion 34 determines whether the detected overshoot amount is greater than the threshold previously stored therein (S7). The threshold to be compared with the detected overshoot amount is, for example, zero. In other words, when the threshold is zero, the control portion 34 determines whether overshooting is present or absent (S7).

When the control portion 34 determines that overshooting is absent (not exceeding the threshold of zero) (NO in S7), the control portion 34 controls the drive portion 25 to set the rotation speed of the turret 22 at its rated maximum speed and to perform the actual indexing operation (S8), after which the indexing operation is ended.

When the control portion 34 determines that overshooting is present (exceeding the threshold of zero) (YES in S7), the control portion 34 controls the drive portion 25 to set the rotation speed of the turret 22 at a speed lower than its rated maximum speed, which is assumed to cause no overshooting, and to perform the actual indexing operation (S13), after which the indexing operation is ended.

When the control portion 34 controls the drive portion 25 to rotate the turret 22 at a speed lower than its rated maximum speed (S13), the rotation speed to be used is one preset by experimentation. The preset speed may be a single rotation speed or a plurality of different rotation speeds.

When a plurality of preset rotation speeds is provided, the control portion 34 may select one of the preset rotation speeds according to the overshoot amount detected in Step 6 (S6). In this case, a plurality of thresholds to be compared in Step 7 (S7) is set, and the control portion 34 compares the detected overshoot amount with each of the thresholds. The control portion 34 may then select one rotation speed from the plurality of rotation speeds according to the magnitude of the overshoot amount relative to each threshold. Specifically, the control portion 34 may select a slower rotation speed as the overshoot amount detected in Step 6 becomes larger.

The threshold to be compared with the detected overshoot amount in Step 7 (S7) does not need to be zero and any positive value exceeding zero may be used. In Step 13 (S13), the thresholds may be provided as a plurality of values corresponding to multiple rotation speeds preset by experimentation, and the control portion 34 may set the rotation speed stepwise according to the ranges of the plurality of thresholds.

In Step 4 (S4), when the control portion 34 determines that the eccentricity δ exceeds the threshold δ0 (YES in S4), it displays a message urging a reconsideration of the tool layout on the display of the control device 30 (S9). In other words, when the eccentricity δ exceeds the threshold δ0, overshooting is highly likely to occur by the indexing operation of the turret 22 to rotate the turret 22 at its rated maximum rotation speed. Thus, the control portion 34 makes a notification urging the user by displaying that the tool layout should be changed to one causing no overshooting. In this case, the display functions as a notification portion.

Regarding this, when the user changes the tool layout (YES in S10), it returns to before Step 1 (S1).

On the other hand, when the user does not change the tool layout (NO in S10), for example, when all of the turret surfaces 23 have the tool holders T attached and the arrangement of the tool holders T cannot be changed, the control portion 34 controls the drive portion 25 to perform a trial run of the indexing operation of the turret 22 at a rotation speed lower than its rated maximum speed, the rotation speed being preset according to the eccentricity δ detected in Step 3 (S3) (S11).

In this trial run of the indexing operation, the tool holder T disposed at the position where the rotation angle around the axis C2 becomes the largest from the position of the workpiece W (the position of the axis C1 in FIGS. 2, 6 and 7) is rotated and stopped to be indexed to the workpiece W disposed at the axis C1.

In this trial run of the indexing operation, the control portion 34 or the drive portion 25 detects an overshoot amount of the tool holder T disposed at the position where the rotation angle around the axis C2 becomes the largest from the position of the workpiece W disposed at the axis C1 (S12). The overshoot amount is zero when the tool holder T stops without overshooting. The overshoot amount is the rotation angle from the intended stopping position when it stops with overshooting.

The control portion 34 controls the drive portion 25 to set the rotation speed of the turret 22 at a speed lower than its rated maximum speed, which is expected not to cause overshooting, based on the detected overshoot amount, to perform the actual indexing operation (S13), and ends the indexing operation.

When the control portion 34 controls the drive portion 25 to rotate the turret 22 at a speed lower than its rated maximum speed (S13), such rotation speed is preset by experimentation. This experimentally preset rotation speed may be a single rotation speed or a plurality of different rotation speeds.

When a plurality of predetermined rotation speeds are set, the control portion 34 may select one rotation speed from the plurality of predetermined rotation speeds according to the overshoot amount detected in Step 6 (S6). In this case, the control portion 34 selects a slower rotation speed as the overshoot amount detected in Step 6 becomes larger.

As described above in detail, the control device 30 of the turret 22 and the turret lathe 100 of the present embodiment can improve accuracy of the stopping position of the rotation of the turret 22 by rotating the turret at a rotation speed according to the tool layout of the tool holder(s) T.

In the control device 30 of the turret 22 and the turret lathe 100 of the present embodiment, the control portion 34 lowers the rotation speed of the turret 22 according to the overshoot amount so as to reduce the overshoot amount (processing of S13 in FIG. 8). However, in the turret control device and the turret lathe according to the present invention, the control portion 34 may not perform such processing (S13) that lowers the rotation speed of the turret 22 according to the overshoot amount so as to reduce the overshoot amount.

In other words, in the turret control device and the turret lathe according to the present invention, in the processing of S4 in FIG. 8, when the eccentricity δ has exceeded the threshold δ0 (YES in S4), the control portion 34 may perform at that time at least a processing (S13) of controlling the drive portion 25 to make the rotation speed of the turret 22 slower than its rated maximum speed.

In the control device 30 of the turret 22 and the turret lathe 100 of the present embodiment, the user manually inputs, to the receiving portion 31, information identifying the tool holder(s) T and information identifying the turret surface(s) 23, to which the tool holder(s) T are attached. However, in the turret control device and the turret lathe according to the present invention, it is not limited to the one that the user manually inputs, to the receiving portion 31, information identifying the tool holder(s) T and information identifying the turret surface(s) 23, to which the tool holder(s) T are attached.

In other words, an embodiment of the turret control device and the turret lathe according to the present invention, may also have a configuration in which each tool holder T is provided with a storage element (RFID tag, or the like) storing therein information identifying the tool holder T and each turret surface 23 is provided with an identifiable reader (RFID reader or the like) that reads information identifying the tool holder T from the storage element of the tool holder T attached to the turret surface 23.

In such embodiment of the turret control device and the turret lathe, the receiving portion 31 identifies the reader provided on each turret surface 23 and acquires information that identifies the tool holder T and that has been read by each reader. This can identify the tool holder T attached to each turret surface 23 and automatically recognize the tool layout of the turret 22, thereby eliminating the need for manual input by the user.

### [Cross-reference to Related Application]

The present application is based upon and claims the benefit of priority from Japanese Patent Application No. 2023-107638 filed with the Japan Patent Office on June 30, 2023, the entire disclosure of which is incorporated in its entirety in the present specification by reference.

## Claims

1. A turret control device comprising:
a drive portion that is configured to rotate a turret about a predetermined rotation center, the turret comprising a plurality of turret surfaces to which a tool holder comprising a tool is attached;
a control portion that is configured to control an operation of the drive portion;
a receiving portion that is configured to receive an input of information regarding a tool layout identifying an arrangement in which the tool holder is attached to the turret surface;
a center-of-gravity calculation portion that is configured to calculate a center of gravity of the turret in the tool layout, based on the information regarding the tool layout inputted to the receiving portion, information regarding a weight and a center of gravity of the tool holder attached to the turret surface, and information regarding a weight and a center of gravity of the turret alone; and
an eccentricity calculation portion that is configured to calculate an eccentricity of the center of gravity of the turret calculated by the center-of-gravity calculation portion with respect to a position of the rotation center,
wherein the control portion is configured to control a rotation speed of the turret by the drive portion based on the eccentricity.

2. The turret control device according to claim 1, further comprising a notification portion that is configured to display information urging a change of the tool layout,
wherein the control portion is configured to control the notification portion to notify the information urging the change of the tool layout when the eccentricity is greater than a preset threshold.

3. The turret control device according to claim 1, further comprising an overshoot-amount detection portion that is configured to detect an overshoot amount when an indexing operation is performed in which the turret is rotated at a predetermined rotation speed and the tool holder is then stopped at an indexing position,
wherein the control portion is configured to control the drive portion to reduce the rotation speed when the overshoot amount is greater than a predetermined threshold.

4. A turret lathe comprising:
a turret device that comprises a turret, wherein the turret rotates about a predetermined rotation center and comprises a plurality of turret surfaces to which a tool holder comprising a tool is attached;
a main spindle that is configured to hold a workpiece machined by the tool attached to the turret; and
a control device that is configured to control the main spindle and the turret,
wherein the control device comprises the turret control device according to any one of claims 1 to 3.
